# EUROPEAN PATENT SPECIFICATION

(11) **EP 4 481 606 B1**
(45) Date of publication and mention of the grant of the patent: **09.12.2026**
(21) Application number: 24182003.4
(22) Date of filing: 13.06.2024
(51) Int. Cl.: G06F 21/57, G06F 8/76, G06F 8/658, G06F 8/36, G06F 8/71

(54) **METHODS AND SYSTEMS FOR THE AUTOMATIC CREATION OF A HYBRID ARCHITECTURE THAT SUPPORTS A NEW AND AN EXISTING LIBRARY IN AN ENTERPRISE APPLICATION**
VERFAHREN UND SYSTEME ZUR AUTOMATISCHEN ERSTELLUNG EINER HYBRIDEN ARCHITEKTUR, DIE EINE NEUE UND EINE BESTEHENDE BIBLIOTHEK IN EINER UNTERNEHMENSANWENDUNG UNTERSTÜTZT
PROCÉDÉS ET SYSTÈMES POUR LA CRÉATION AUTOMATIQUE D'UNE ARCHITECTURE HYBRIDE PRENANT EN CHARGE UNE BIBLIOTHÈQUE EXISTANTE ET UNE NOUVELLE BIBLIOTHÈQUE DANS UNE APPLICATION D'ENTREPRISE

(30) Priority: 22.06.2023 IN 202321041665
(43) Date of publication of application: 25.12.2024
(73) Proprietor: Tata Consultancy Services Limited, Maharashtra (IN)
(72) Inventor: VIDHANI, KUMAR MANSUKHLAL, 382007 Gandhinagar (IN); BHATTACHAR, RAJAN MINDIGALALASINGARA, 560066 Bangalore (IN); LODHA, SACHIN PREMSUKH, 411013 Pune (IN); SYED, HABEEB BASHA, 500032 Hyderabad (IN); SINGH DILIP THAKUR, MEENA, 560009 Bangalore (IN)
(74) Representative: Goddar, Heinz J.

(56) References cited:
- US-A1- 2008 022 266
- US-A1- 2019 004 774
- MARIUS NITA ET AL: "Using twinning to adapt programs to alternative APIs", SOFTWARE ENGINEERING, 2010 ACM/IEEE 32ND INTERNATIONAL CONFERENCE ON, IEEE, 2 PENN PLAZA, SUITE 701 NEW YORK NY 10121-0701 USA, 1 May 2010 (2010-05-01), pages 205 - 214, XP058199246, ISBN: 978-1-60558-719-6, DOI: 10.1145/1806799.1806832

## Description

### CROSS-REFERENCE TO RELATED APPLICATIONS AND PRIORITY

The present application claims priority from Indian patent application, Application No. 202321041665, filed in India on June 22, 2023.

### TECHNICAL FIELD

The disclosure herein generally relates to the field of software, and, more particularly, to methods and systems for enabling a hybrid architecture in an enterprise application.

### BACKGROUND

Quantum computers are becoming a reality as a technology to implement a new computing paradigm evolves. They have an advantage over the classical computers for solving some of complex computing problems. Therefore, there is a great push from multiple enterprises around the world to make them practical. With advantages of quantum computing comes a concern for the security that underpins much of the digital world. Quantum computers pose serious threat to existing cryptographic systems which are used in day-to-day digital communications. These threats are recognized by the enterprises and strategies to mitigate these threats are being planned.

Traditionally, standardization of new cryptographic algorithms which are quantum attacks resistant is being explored. All enterprises are required to adopt either these standards or their equivalent to secure their digital communications. However, to incorporate these standards, enterprises must change their applications to accommodate them. As these standards are still evolving, it is challenging for enterprises to afford ignoring existing well established and time-tested cryptographic algorithms. In a nutshell, enterprises should incorporate new standards as well as keep support for existing cryptographic algorithms intact in their applications. This requires enabling a hybrid architecture in enterprise applications.

There exists an approach to enable support for multiple libraries that involves putting a switch in an enterprise application that controls the execution of libraries based on switch value. This approach surely helps in controlling execution of paths, but to solve the problem of making enterprise applications quantum attacks resistant other scenarios such as doing double encryption of existing sensitive data through composition of libraries, determining parameters of a new library based on the parameter values of existing libraries, and/or the like are required to be handled. Composing software systems or parallel libraries without sacrificing performance is one of objectives in High Performance Computing (HPC). There are few existing approaches to compose parallel libraries. One existing approach includes composing parallel libraries using a hardware abstraction called hart from an Operating System to applications and defining a new resource management interface that exchanges abstractions. In another approach, a pluggable application programming interface (API) framework solution named High Performance System on Chip (HiPER) is used that unifies presentation of computation, communication, and other work as task-parallel runtime system. Existing approaches are an attempt to arrive at a common representation of computation for enabling composition of multiple parallel libraries. However, the existing approaches can't be used to address the problem of enabling hybrid architecture in an enterprise application.

Document US 2019/004774 A1 discloses techniques by which a computing device may automate source code adaption to inject features between platform versions. The computing device may comprise a memory and a processor. The memory may be configured to store source code referencing a first application programming interface for a first version of a programming platform. The processor may be configured to automatically adapt the source code to reference a second application programming interface for a second version of the programming platform such that the source code maintains functionality of the first application programming interface for the first version of the programming platform, and output, based on the automatically adapted source code, an executable file

Document US 2008/022266 A1 (HUDSON THOMAS R [US]) 24 January 2008 (2008-01-24) A1 discloses method, apparatus and computer-readable medium for managing changes to a library in a Producer IDE is presented. In one embodiment, the method includes the steps of compiling user source code in a consumer's workspace using at least one class from an original class library to produce a user's executable binary files; searching the executable binary files for references to Application Program Interface (API) changes that occurred when the original class library was updated; and generating at least one work item for each of the API changes that is referred to by the user's executable binary files.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising receiving, via a first module executed by one or more hardware processors, an enterprise application and a set of detection rules as an input, wherein set of detection rules represents specification of one or more method signatures of an existing library used by the enterprise application; performing, via the first module executed by one or more hardware processors, a match between the set of detection rules and a set of binary fragments identified in the enterprise application to obtain a set of matched binary fragments; obtaining, via a second module executed by the one or more hardware processors, a plurality of source code fragments by mapping the set of matched binary fragments to a corresponding application source code of the enterprise application; enabling, via a third module executed by the one or more hardware processors, a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries; configuring, via a fourth module executed by the one or more hardware processors, the at least two libraries in the modified enterprise application such that compatibility between the at least two libraries is maintained, wherein the at least two libraries in the modified enterprise application are configured by performing at least one of: (i) detecting one or more first type of program variables and one or more second type of program variables in the plurality of source code fragments based on a status indicative of an impact on the modified enterprise application due to one or more incoming libraries from the at least two different libraries; and (ii) transforming the one or more second type of program variables into a specific type to support a compatible configuration of both (i) the one or more existing libraries, and (ii) the one or more incoming libraries; and (a) determining one or more parameters of the one or more incoming libraries using a program slicing technique based on a context and usage of the one or more existing libraries.

In another aspect, a system is provided. The system comprising a memory storing instructions; one or more communication interfaces; and one or more hardware processors coupled to the memory via the one or more communication interfaces, wherein the one or more hardware processors are configured by the instructions to: receive an enterprise application and a set of detection rules as an input, wherein set of detection rules represents specification of one or more method signatures of an existing library used by the enterprise application; perform a match between the set of detection rules and a set of binary fragments identified in the enterprise application to obtain a set of matched binary fragments; obtain a plurality of source code fragments by mapping the set of matched binary fragments to a corresponding application source code of the enterprise application; enable a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries; configure the at least two libraries in the modified enterprise application such that compatibility between the at least two libraries is maintained, wherein the at least two libraries in the modified enterprise application are configured by performing at least one of: (i) detecting one or more first type of program variables and one or more second type of program variables in the plurality of source code fragments based on a status indicative of an impact on the modified enterprise application due to one or more incoming libraries from the at least two different libraries; and (ii) transforming the one or more second type of program variables into a specific type to support a compatible configuration of both (i) the one or more existing libraries, and (ii) the one or more incoming libraries; and (a) determining one or more parameters of the one or more incoming libraries using a program slicing technique based on a context and usage of the one or more existing libraries.

In yet another aspect, a non-transitory computer readable medium is provided. The non-transitory computer readable medium are configured by instructions for receiving, an enterprise application and a set of detection rules as an input, wherein set of detection rules represents specification of one or more method signatures of an existing library used by the enterprise application; performing, a match between the set of detection rules and a set of binary fragments identified in the enterprise application to obtain a set of matched binary fragments; obtaining, a plurality of source code fragments by mapping the set of matched binary fragments to a corresponding application source code of the enterprise application; enabling, a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries; configuring, the at least two libraries in the modified enterprise application such that compatibility between the at least two libraries is maintained, wherein the at least two libraries in the modified enterprise application are configured by performing at least one of: (i) detecting one or more first type of program variables and one or more second type of program variables in the plurality of source code fragments based on a status indicative of an impact on the modified enterprise application due to one or more incoming libraries from the at least two different libraries; and (ii) transforming the one or more second type of program variables into a specific type to support a compatible configuration of both (i) the one or more existing libraries, and (ii) the one or more incoming libraries; and (a) determining one or more parameters of the one or more incoming libraries using a program slicing technique based on a context and usage of the one or more existing libraries.

In accordance with an embodiment of the present disclosure, the code base of the enterprise application is changed by: (i) annotating a plurality of functions invoking the plurality of source code fragments obtained by the binary to source code matching module; (ii) creating one or more new paths around each of the annotated plurality of functions in the plurality of source code of the enterprise application to support execution of the one or more incoming libraries; and (iii) injecting a plurality of new source code fragments in the created one or more new paths around each of the annotated plurality of functions in the plurality of source code of the enterprise application.

In accordance with an embodiment of the present disclosure, the one or more first type of program variables in the plurality of source code fragments exhibit no relation on the modified enterprise application due to one or more incoming libraries from the at least two different libraries.

In accordance with an embodiment of the present disclosure, the one or more second type of program variables in the plurality of source code fragments exhibit an impact on the modified enterprise application due to one or more incoming libraries from the at least two different libraries.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for enabling a hybrid architecture in an enterprise application, according to some embodiments of the present disclosure.
FIG. 2 is a functional block diagram for enabling a hybrid architecture in an enterprise application, using the system of FIG. 1, according to some embodiments of the present disclosure.
FIG. 3 illustrates an exemplary flow diagram illustrating a method for enabling a hybrid architecture in an enterprise application, using the system of FIG. 1, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Embodiments of the present disclosure provide a method and system that enables hybrid architecture in an enterprise application to mitigate quantum attacks. The method of the present disclosure changes codebase of the enterprise application to enable hybrid architecture. It creates new paths within the enterprise application to support execution of a new library. It injects the code that enables double encryption of data being processed by the application. It injects the code that transforms program variables to address the compatibility challenges between existing and new libraries.

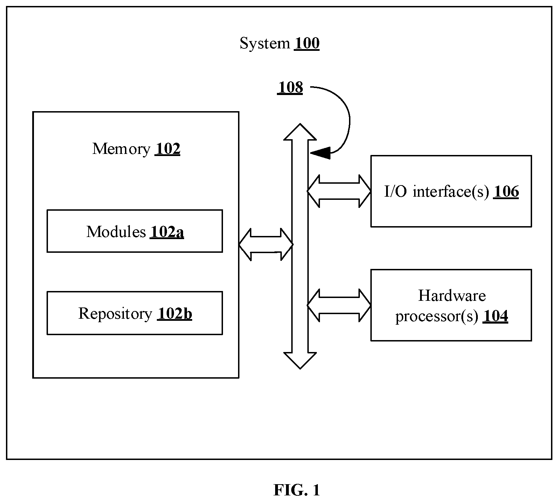

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 illustrates an exemplary system for auto repairing vulnerable code program fragments of a software according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG.1) such as an inventory module, a binary to source code matching module, a code insertion module, a function composition module, path creation module, function annotation module, new code injection module, no operation detection module, parameters determination module and transformation module. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

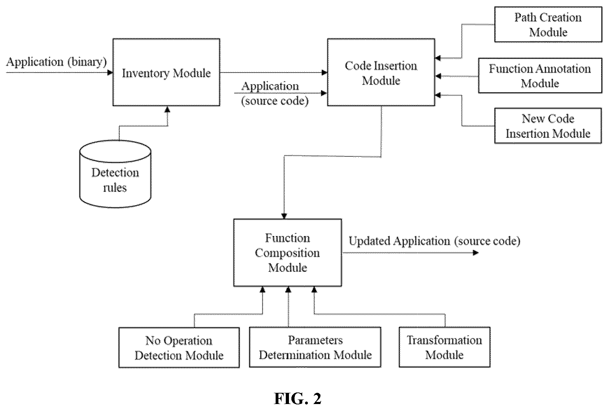

FIG. 2, with reference to FIG. 1, is a functional block diagram for enabling a hybrid architecture in an enterprise application, using the system of FIG. 1, according to some embodiments of the present disclosure. As shown in FIG. 2, The system 100 comprises an inventory module, a binary to source code matching module, a code insertion module, and a function composition module. The code insertion module further comprises a path creation module, a function annotation module, and a new code injection module. The function composition module further comprises no operation detection module, parameters determination module and transformation module.

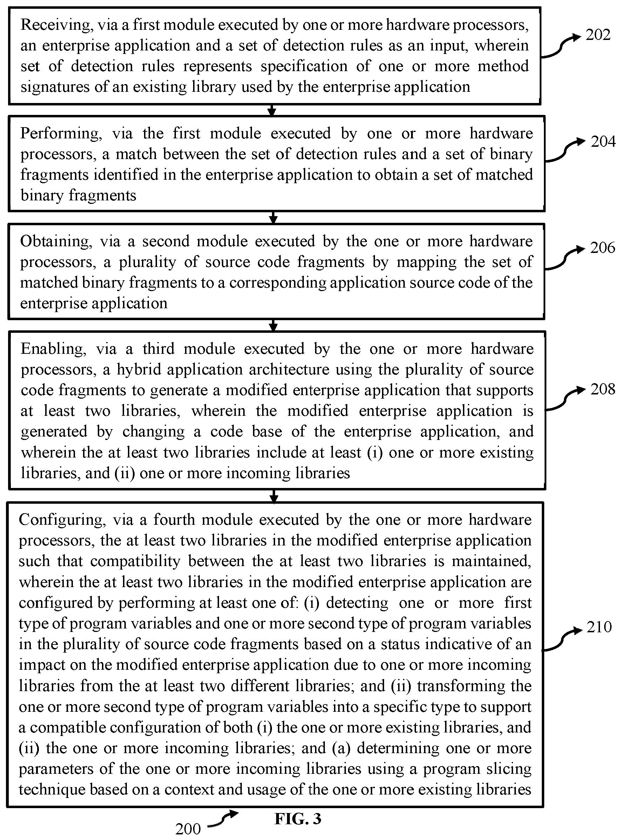

FIG. 3, with reference to FIGS. 1 and 2, illustrates an exemplary flow diagram illustrating a method for enabling a hybrid architecture in an enterprise application, using the system of FIG. 1, in accordance with some embodiments of the present disclosure.

Referring to FIG. 3, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the block diagram of FIG. 2, the flow diagram as depicted in FIG. 3, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, a first module executed by one or more hardware processors is configured to receive an enterprise application and a set of detection rules as an input. The set of detection rules represents specification of one or more method signatures of an existing library used by the enterprise application. It is shown in FIG. 2 that the enterprise application and the set of detection rules are received as input at the first module. The first module is referred as inventory module.

Further, at step 204 of the present disclosure, the first module executed by the one or more hardware processors is configured to perform a match between the set of detection rules and a set of binary fragments identified in the enterprise application to obtain a set of matched binary fragments. The inventory module processes the enterprise application and match the set of detection rules against a plurality of binary fragments. The matched plurality of binary fragments, which are a set of APIs corresponding to a library are marked for further processing.

A detection rule for an init API of the Cipher Java class is further better understood by way of following pseudocode provided as example:

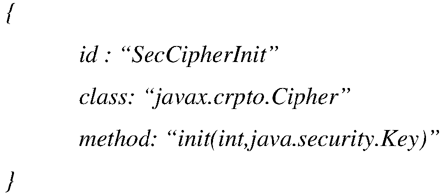

The inventory module uses the above detection rule and applies it to a binary version of code as shown in a pseudocode below:

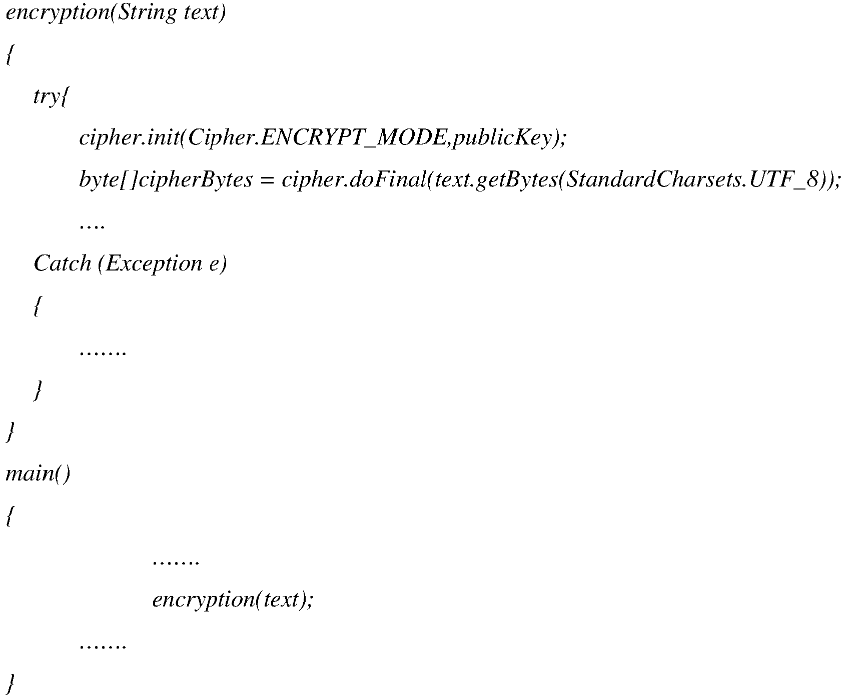

Post matching, the inventory module output the matched binary fragment of program statement *"cipher.init(Cipher.ENCRYPT_MODE, publickey)".*

At step 206 of the present disclosure, a second module executed by the one or more hardware processors is configured to obtain a plurality of source code fragments by mapping the set of matched binary fragments to a corresponding application source code of the enterprise application. The second module is referred as Binary to source code matching module. The Binary to source code matching module takes application source as an additional input. It maps the set of binary code fragments marked by the inventory module to corresponding source code fragments using a state in the art matching algorithm (e.g., 'refer IA 202321012791 titled 'Method And System For Matching Source Code And Binary Code'). It is shown in the above pseudocode that the Binary to source code matching module maps the matched binary code fragment of "cipher. init(Cipher.ENCRYPT_MODE, publicKey)" to the corresponding source code fragment.

At step 208 of the present disclosure, a third module executed by the one or more hardware processors is configured to enable a hybrid application architecture using the plurality of source code fragments to generate a modified enterprise application that supports at least two libraries. Here, the modified enterprise application is generated by changing a code base of the enterprise application, and wherein the at least two libraries include at least (i) one or more existing libraries, and (ii) one or more incoming libraries. The third module is referred as code insertion module. The code insertion module injects code into input enterprise application to enable the hybrid application architecture. The code insertion module uses the plurality of source code fragments mapped by the Binary to source code matching module as references. In an embodiment, the code base of the enterprise application is changed by performing: (i) annotating a plurality of functions invoking the plurality of source code fragments obtained by the binary to source code matching module; (ii) creating one or more new paths around each of the annotated plurality of functions in the plurality of source code of the enterprise application to support execution of the one or more incoming libraries; and (iii) injecting a plurality of new source code fragments in the created one or more new paths around each of the annotated plurality of functions in the plurality of source code of the enterprise application. In context of the present disclosure, the expression 'incoming libraries' is referred for a new library. In other words, the code insertion module is supported by three additional modules: Function annotation module, Path creation module and New code injection module. The function annotation module annotates the plurality of functions which are invoking the plurality of matched functions as detected by the Binary to source code matching module. As shown in above pseudocode, function annotation module annotates the "encryption" method as the matched method "cipher.init(Cipher. ENCRYPT MODE, publicKey)" is invoked in the "encryption" method. The output of function annotation module is used by Path creation module while generating "if-else" code. The Path creation module introduces new paths in the input enterprise application. To achieve this, an "if-else" code construct is injected around the plurality of annotated functions in the source code of the enterprise application. At every annotated function, the "if-else" injection creates two more paths in the enterprise application. First path is used to retain the existing library while second path can host code for the new library. The new code injection module injects the plurality of **new** source code fragments in source code of the enterprise application. Typically, the new code injection module inserts these fragments in "else" path (branch) which is created by the Path creation module.

An example of encryption example after introduction of new path is shown in a pseudocode below:

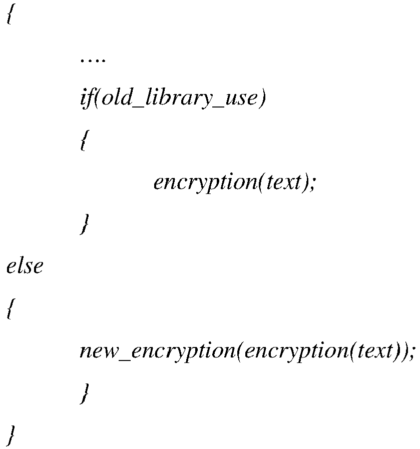

The above pseudocode represents path creation module introducing new paths in the "main" method around the program statement that invokes "encryption" method *main().* In the pseudo code, "if" condition indicates whether a user wants to continue with usage of the existing library or switched to new library of "else" part. The New code injection module injects a new program statement in form of method invocation "new_encryption in the "else" path (branch) as shown in the above the pseudo code.

Further, at step 210 of the present disclosure, a fourth module executed by the one or more hardware processors is configured to configure the at least two libraries in the modified enterprise application such that compatibility between the at least two libraries is maintained. The fourth module is referred as function composition module. The function composition module enables the usage of both existing as well as new libraries in the enterprise application. The at least two libraries in the modified enterprise application are configured by performing at least one of: (i) detecting one or more first type of program variables and one or more second type of program variables in the plurality of source code fragments based on a status indicative of an impact on the modified enterprise application due to one or more incoming libraries from the at least two different libraries; and (ii) transforming the one or more second type of program variables into a specific type to support a compatible configuration of both (i) the one or more existing libraries, and (ii) the one or more incoming libraries; and (a) determining one or more parameters of the one or more incoming libraries using a program slicing technique based on a context and usage of the one or more existing libraries. In an embodiment, the one or more first type of program variables in the plurality of source code fragments exhibit no relation on the modified enterprise application due to one or more incoming libraries from the at least two different libraries. Also, the one or more second type of program variables in the plurality of source code fragments exhibit an impact on the modified enterprise application due to one or more incoming libraries from the at least two different libraries.

The step 210 is better understood by way of the following description provided as exemplary explanation.

To correctly configure both the one or more existing libraries and the one or more new libraries in the enterprise application, the function composition module relies on three additional modules namely, no operation (Noop) detection module, a transformation module, and a parameter determination module. The Noop detection module is responsible for detecting program statements which are not impacted by a new library being introduced. The transformation module processes and converts a program variable into appropriate type to support the compatible configuration of both existing and new libraries. The parameter determination module determines the parameters of new library based on the context and usage of existing library. This module may require additional inputs from a user.

The above pseudocode representing path creation module introducing new paths in the "main" method around the program statement that invokes "encryption" method represents a simpler view of the enterprise application. It is shown in above pseudocode that the output of encryption function in "else" block can be consumed by the new library function "new_encryption".

An example of a modified sample code printing output of encryption function is shown in a pseudocode below: 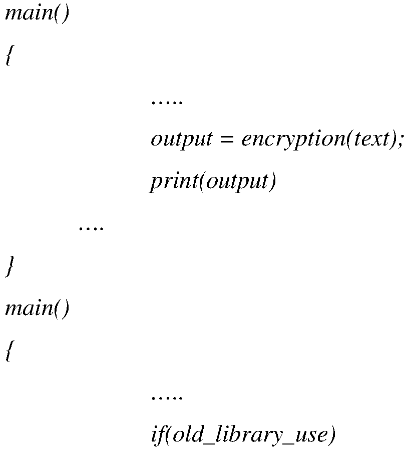 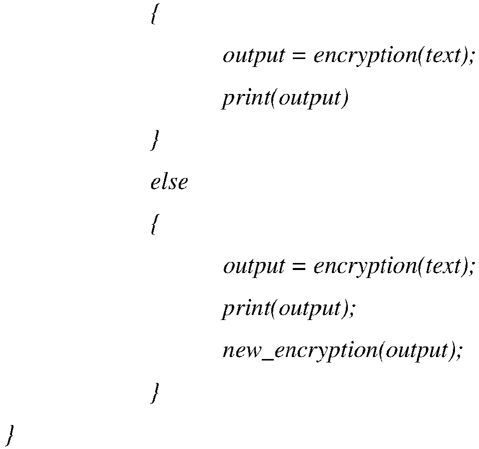 In the above modified pseudocode example, the main() function calls "encryption" function and prints its output. While modifying the application, it is necessary to retain original behavior of the application. Therefore, printing of a value that is returned by "encryption" function should be retained. However, this operation does not have any impact on the subsequent operation which is consuming the output generated by "encryption" function. The Noop detection module is developed for identifying such program statements. The Noop detection module maintains a list of operations which do not alter inputs. If an operation is not found in the list of operations then, the Noop detection module computes a plurality of out parameters for a function representing an operation from the list of operations. An out parameter is an input parameter which is modified by a function and its modification is visible outside the function. For every input parameter, a forward slice is computed. Typically, the forward slice consists of nodes which are connected through control and data dependent edges. The forward slice is further processed to extract nodes which are linked through data dependent edges. Further, to collection of data dependent nodes, if a node represents an assignment program statement and its left operand represent a program variable which belongs to a set of input parameters then, the input parameter is marked. If the marked input parameter belongs to a set of output parameters then, the output parameter is also marked. For every marked output parameter, the forward slice is computed. If the forward slice contains a node that is linked to any of input parameters of a new library then, the program statement representing the function invocation is marked as affected by new library.

The transformation module transforms a program variable of application. It is required in a scenario where the output generated by existing library is not compatible with an input requirement of new library. An example of modified pseudocode that handles incompatible data types is provided below: 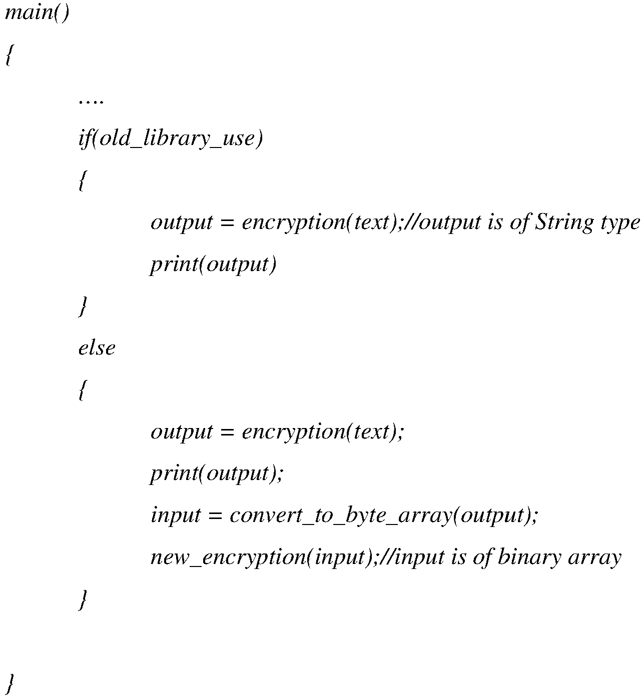 As shown in the above modified pseudocode that handles incompatible data types, the "encryption" function generates an output in a text form while "new_encrption" receives the input in "byte[] array" form. The transformation module inserts appropriate program statement to handle this scenario. As shown in the above modified pseudocode, the transformation module inserts "convert_to_byte_array" program statement to handle incompatible data types of "output" and "input" variables. To change a type of a program variable, the transformation module invokes standard type-cast operator. Alternatively, the transformation module may use a suitable type converting function based on type of program variable and desired type.

In a real world enterprise application, "encryption" and "new_encryption" functions as depicted in all of the above pseudocode may not be simple. Such functions may take more than one parameter as input to generate required output. Moreover, there could be a dependency between parameters of both functions. Since "encryption" function is part of existing library and the original behavior of application needs to be retained, the values of parameters of "new_encryption" function may depend on the values of parameters passed to "encryption" function. Therefore, any dependency (if exist) between parameters of both functions must flow from "encryption" function to "new_encryption" function.

An example of determination of parameters of new library function is provided in the pseudocode below: 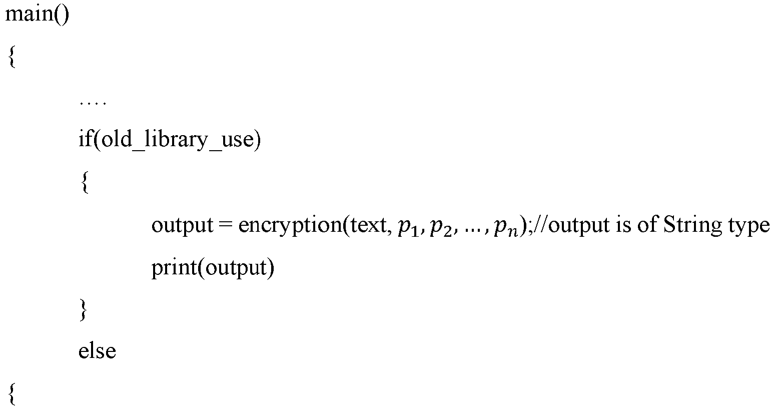 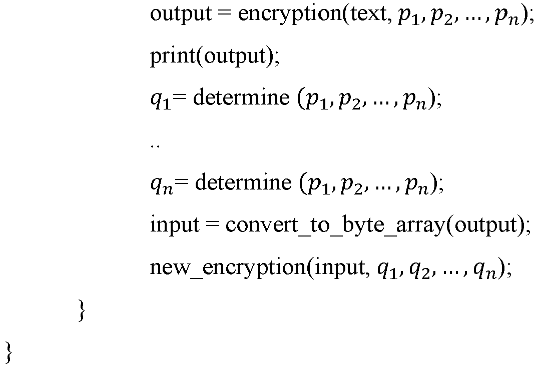 As shown in the above pseudocode, the parameters *q*₁*, q*₂*,* ..., *qₙ* of "new_encryption" function are dependent on parameters *p*₁, *p*₂, ..., *p*ₙ of "encryption" function. The parameters determination module uses program slicing technique to determine the values of parameters *p*₁, *p*₂, ..., *p*ₙ. The parameters determination module assumes the availability of domain knowledge with respect to existing and new libraries. As per the domain knowledge, the parameters transformation module inserts appropriate program statements or functions to generate the values of parameters *q*₁*, q*₂*,* ..., *qₙ.* The domain knowledge could be in form of size of parameters, types of parameters, or values of parameters for both the one or existing and incoming libraries covering both types of parameters: input and output.

The system of the present disclosure, processes entire enterprise application and makes changes to it to enable support for a new library. Enabling support for more than one library implies iterating over same method for every new library with an assumption that inputs to new libraries are independent of each other.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:
receiving (202), via a first module executed by one or more hardware processors, an enterprise application and a set of detection rules as an input, wherein the set of detection rules represents specification of one or more method signatures of an existing library used by the enterprise application;
performing (204), via the first module executed by one or more hardware processors, a match between the set of detection rules and a set of binary fragments identified in the enterprise application to obtain a set of matched binary fragments;
obtaining (206), via a second module executed by the one or more hardware processors, a plurality of source code fragments by mapping the set of matched binary fragments to a corresponding application source code of the enterprise application; enabling (208), via a third module executed by the one or more hardware processors, a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries, wherein the code base of the enterprise application is changed by:
(i) annotating a plurality of functions invoking the plurality of source code fragments obtained by the binary to source code matching module;
(ii)creating one or more new paths around each of the annotated plurality of functions in the plurality of source code of the enterprise application to support execution of the one or more incoming libraries; and
(iii)injecting a plurality of new source code fragments in the created one or more new paths around each of the annotated plurality of functions in the plurality of source code of the enterprise application;
configuring (210), via a fourth module executed by the one or more hardware processors, the at least two libraries in the modified enterprise application such that compatibility between the at least two libraries is maintained, wherein the at least two libraries in the modified enterprise application are configured by performing at least:
(i) detecting one or more first type of program variables and one or more second type of program variables in the plurality of source code fragments based on a status indicative of an impact on the modified enterprise application due to the one or more incoming libraries from the at least two different libraries, wherein the one or more second type of program variables in the plurality of source code fragments exhibit an impact on the modified enterprise application due to one or more incoming libraries from the at least two different libraries and further detecting the one or more first type of program variables that are not impacted by the one or more incoming libraries being introduced; and
(ii) transforming the one or more second type of program variables into a specific type to support a compatible configuration of both (i) the one or more existing libraries, and (ii) the one or more incoming libraries, wherein transforming comprises inserting a program statement and applying a type-cast operator, wherein a program variable is transformed when an output generated by the one or more existing libraries is not compatible with an input requirement of the one or more incoming libraries, wherein the injected plurality of new source code fragments enable double encryption in the created one or more new paths, where the output of the one or more existing libraries is generated by an encryption function and the input is provided to an encryption function of the one or more incoming libraries; and
(iii) determining one or more parameters of the one or more incoming libraries using a program slicing technique based on a context and usage of the one or more existing libraries.

2. The processor implemented method as claimed in claim 1, wherein the one or more first type of program variables in the plurality of source code fragments exhibit no relation on the modified enterprise application due to one or more incoming libraries from the at least two different libraries.

3. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive an enterprise application and a set of detection rules as an input, wherein the set of detection rules represents specification of one or more method signatures of an existing library used by the enterprise application;
perform a match between the set of detection rules and a set of binary fragments identified in the enterprise application to obtain a set of matched binary fragments;
obtain a plurality of source code fragments by mapping the set of matched binary fragments to a corresponding application source code of the enterprise application;
enable a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries, wherein the code base of the enterprise application is changed by:
(i) annotating a plurality of functions invoking the plurality of source code fragments obtained by the binary to source code matching module;
(ii) creating one or more new paths around each of the annotated plurality of functions in the plurality of source code of the enterprise application to support execution of the one or more incoming libraries; and
injecting a plurality of new source code fragments in the created one or more new paths around each of the annotated plurality of functions in the plurality of source code of the enterprise application;
configure the at least two libraries in the modified enterprise application such that compatibility between the at least two libraries is maintained, wherein the at least two libraries in the modified enterprise application are configured by performing at least:
(i) detecting one or more first type of program variables and one or more second type of program variables in the plurality of source code fragments based on a status indicative of an impact on the modified enterprise application due to the one or more incoming libraries from the at least two different libraries ,wherein the one or more second type of program variables in the plurality of source code fragments exhibit an impact on the modified enterprise application due to one or more incoming libraries from the at least two different libraries and further detecting the one or more first type of program variables that are not impacted by the one or more incoming libraries being introduced; and
(ii) transforming the one or more second type of program variables into a specific type to support a compatible configuration of both (i) the one or more existing libraries, and (ii) the one or more incoming libraries, wherein transforming comprises inserting a program statement and applying a type-cast operator, wherein a program variable is transformed when an output generated by the one or more existing libraries is not compatible with an input requirement of the one or more incoming libraries, wherein the injected plurality of new source code fragments enable double encryption in the created one or more new paths, where the output of the one or more existing libraries is generated by an encryption function and the input is provided to an encryption function of the one or more incoming libraries; and
(iii) determining one or more parameters of the one or more incoming libraries using a program slicing technique based on a context and usage of the one or more existing libraries.

4. The system as claimed in claim 3, wherein the one or more first type of program variables in the plurality of source code fragments exhibit no relation on the modified enterprise application due to one or more incoming libraries from the at least two different libraries.

5. One or more non-transitory computer readable mediums comprising one or more instructions which when executed by one or more hardware processors cause:
receiving an enterprise application and a set of detection rules as an input, wherein the set of detection rules represents specification of one or more method signatures of an existing library used by the enterprise application;
performing a match between the set of detection rules and a set of binary fragments identified in the enterprise application to obtain a set of matched binary fragments;
obtaining a plurality of source code fragments by mapping the set of matched binary fragments to a corresponding application source code of the enterprise application; enabling a hybrid application architecture using the plurality of source code fragments to generate a modified enterprise application that supports at least two libraries, wherein the modified enterprise application is generated by changing a code base of the enterprise application, and wherein the at least two libraries include at least (i) one or more existing libraries, and (ii) one or more incoming libraries, wherein the code base of the enterprise application is changed by:
(i) annotating a plurality of functions invoking the plurality of source code fragments obtained by the binary to source code matching module;
(ii) creating one or more new paths around each of the annotated plurality of functions in the plurality of source code of the enterprise application to support execution of the one or more incoming libraries; and
(iii) injecting a plurality of new source code fragments in the created one or more new paths around each of the annotated plurality of functions in the plurality of source code of the enterprise application;
configuring the at least two libraries in the modified enterprise application such that compatibility between the at least two libraries is maintained, wherein the at least two libraries in the modified enterprise application are configured by performing at least:
(i) detecting one or more first type of program variables and one or more second type of program variables in the plurality of source code fragments based on a status indicative of an impact on the modified enterprise application due to the one or more incoming libraries from the at least two different libraries ,wherein the one or more second type of program variables in the plurality of source code fragments exhibit an impact on the modified enterprise application due to one or more incoming libraries from the at least two different libraries and further detecting the one or more first type of program variables that are not impacted by the one or more incoming libraries being introduced; and
(ii) transforming the one or more second type of program variables into a specific type to support a compatible configuration of both (i) the one or more existing libraries, and (ii) the one or more incoming libraries, wherein transforming comprises inserting a program statement and applying a type-cast operator, wherein a program variable is transformed when an output generated by the one or more existing libraries is not compatible with an input requirement of the one or more incoming libraries, wherein the injected plurality of new source code fragments enable double encryption in the created one or more new paths, where the output of the one or more existing libraries is generated by an encryption function and the is provided to an encryption function of the one or more incoming libraries; and
(iii) determining one or more parameters of the one or more incoming libraries using a program slicing technique based on a context and usage of the one or more existing libraries.

6. The non-transitory computer readable mediums as claimed in claim 5, wherein the one or more first type of program variables in the plurality of source code fragments exhibit no relation on the modified enterprise application due to one or more incoming libraries from the at least two different libraries.

## Patentansprüche

1. Prozessorimplementiertes Verfahren (200), umfassend:
Empfangen (202), über ein erstes Modul, das von einem oder mehreren Hardwareprozessoren ausgeführt wird, einer Unternehmensanwendung und eines Satzes von Erkennungsregeln als Eingabe, wobei der Satz von Erkennungsregeln die Spezifikation einer oder mehrerer Verfahrenssignaturen einer bestehenden Bibliothek darstellt, die von der Unternehmensanwendung verwendet wird;
Durchführen (204), über das erste Modul, das von einem oder mehreren Hardwareprozessoren ausgeführt wird, einer Übereinstimmung zwischen dem Satz von Erkennungsregeln und einem Satz von binären Fragmenten, die in der Unternehmensanwendung identifiziert werden, um einen Satz von übereinstimmenden binären Fragmenten zu erhalten;
Erhalten (206), über ein zweites Modul, das von dem einen oder den mehreren Hardwareprozessoren ausgeführt wird, einer Mehrzahl von Quellcodefragmenten durch Abbilden des Satzes von übereinstimmenden binären Fragmenten auf einen entsprechenden Anwendungsquellcode der Unternehmensanwendung;
Ermöglichen (208), über ein drittes Modul, das von dem einen oder den mehreren Hardwareprozessoren ausgeführt wird, einer Hybridanwendungsarchitektur unter Verwendung der Mehrzahl von Quellcodefragmenten, um eine modifizierte Unternehmensanwendung zu erzeugen, die mindestens zwei Bibliotheken unterstützt, wobei die modifizierte Unternehmensanwendung durch Ändern einer Codebasis der Unternehmensanwendung erzeugt wird, und wobei die mindestens zwei Bibliotheken mindestens (i) eine oder mehrere bestehende Bibliotheken und (ii) eine oder mehrere eingehende Bibliotheken beinhalten, wobei die Codebasis der Unternehmensanwendung geändert wird durch:
(i) Annotieren einer Mehrzahl von Funktionen, die die Mehrzahl von Quellcodefragmenten aufrufen, die von dem Binär-zu-Quellcode-Abgleichmodul erhalten werden;
(ii)Erzeugen eines oder mehrerer neuer Pfade um jede der annotierten Mehrzahl von Funktionen in der Mehrzahl von Quellcode der Unternehmensanwendung, um die Ausführung der einen oder mehreren eingehenden Bibliotheken zu unterstützen; und
(iii) Injizieren einer Mehrzahl von neuen Quellcodefragmenten in den erzeugten einen oder die erzeugten mehreren neuen Pfade um jede der annotierten Mehrzahl von Funktionen in der Mehrzahl von Quellcode der Unternehmensanwendung;
Konfigurieren (210), über ein viertes Modul, das von dem einen oder den mehreren Hardwareprozessoren ausgeführt wird, der mindestens zwei Bibliotheken in der modifizierten Unternehmensanwendung, so dass die Kompatibilität zwischen den mindestens zwei Bibliotheken aufrechterhalten wird, wobei die mindestens zwei Bibliotheken in der modifizierten Unternehmensanwendung konfiguriert werden, indem mindestens Folgendes durchgeführt wird:
(i) Detektieren eines oder mehrerer erster Typen von Programmvariablen und eines oder mehrerer zweiter Typen von Programmvariablen in der Mehrzahl von Quellcodefragmenten basierend auf einem Status, der eine Auswirkung auf die modifizierte Unternehmensanwendung aufgrund der einen oder mehreren eingehenden Bibliotheken aus den mindestens zwei verschiedenen Bibliotheken angibt, wobei der eine oder die mehreren zweiten Typen von Programmvariablen in der Mehrzahl von Quellcodefragmenten eine Auswirkung auf die modifizierte Unternehmensanwendung aufgrund der einen oder mehreren eingehenden Bibliotheken aus den mindestens zwei verschiedenen Bibliotheken aufweisen, und ferner Detektieren des einen oder der mehreren ersten Typen von Programmvariablen, die nicht von der einen oder den mehreren eingehenden Bibliotheken, die eingeführt werden, beeinflusst werden; und
(ii) Transformieren des einen oder der mehreren zweiten Typen von Programmvariablen in einen spezifischen Typ, um eine kompatible Konfiguration von sowohl (i) der einen oder den mehreren bestehenden Bibliotheken als auch (ii) der einen oder den mehreren eingehenden Bibliotheken zu unterstützen, wobei das Transformieren das Einfügen einer Programmanweisung und das Anwenden eines Typ-Cast-Operators umfasst, wobei eine Programmvariable transformiert wird, wenn eine Ausgabe, die von der einen oder den mehreren bestehenden Bibliotheken erzeugt wird, nicht mit einer Eingabeanforderung der einen oder der mehreren eingehenden Bibliotheken kompatibel ist, wobei die injizierte Mehrzahl von neuen Quellcodefragmenten eine Doppelverschlüsselung in dem erzeugten einen oder den erzeugten mehreren neuen Pfaden ermöglicht, wobei die Ausgabe der einen oder der mehreren Bibliotheken durch eine Verschlüsselungsfunktion erzeugt wird und die Eingabe einer Verschlüsselungsfunktion der einen oder der mehreren eingehenden Bibliotheken bereitgestellt wird; und
(iii) Bestimmen eines oder mehrerer Parameter der einen oder der mehreren eingehenden Bibliotheken unter Verwendung einer Programm-Slicing-Technik basierend auf einem Kontext und einer Verwendung der einen oder der mehreren bestehenden Bibliotheken.

2. Prozessorimplementiertes Verfahren nach Anspruch 1, wobei der eine oder die mehreren ersten Typen von Programmvariablen in der Mehrzahl von Quellcodefragmenten keine Beziehung auf die modifizierte Unternehmensanwendung aufgrund einer oder mehrerer eingehender Bibliotheken aus den mindestens zwei verschiedenen Bibliotheken aufweisen.

3. System (100), umfassend:
einen Speicher (102), der Anweisungen speichert;
eine oder mehrere Kommunikationsschnittstellen (106); und
einen oder mehrere Hardwareprozessoren (104), die mit dem Speicher (102) über die eine oder die mehreren Kommunikationsschnittstellen (106) gekoppelt sind, wobei der eine oder die mehreren Hardwareprozessoren (104) durch die Anweisungen konfiguriert sind zum:
Empfangen einer Unternehmensanwendung und eines Satzes von Erkennungsregeln als Eingabe, wobei der Satz von Erkennungsregeln die Spezifikation einer oder mehrerer Verfahrenssignaturen einer bestehenden Bibliothek darstellt, die von der Unternehmensanwendung verwendet wird;
Durchführen einer Übereinstimmung zwischen dem Satz von Erkennungsregeln und einem Satz von binären Fragmenten, die in der Unternehmensanwendung identifiziert werden, um einen Satz von übereinstimmenden binären Fragmenten zu erhalten;
Erhalten einer Mehrzahl von Quellcodefragmenten durch Abbilden des Satzes von übereinstimmenden binären Fragmenten auf einen entsprechenden Anwendungsquellcode der Unternehmensanwendung;
Ermöglichen einer Hybridanwendungsarchitektur unter Verwendung der Mehrzahl von Quellcodefragmenten, um eine modifizierte Unternehmensanwendung zu erzeugen, die mindestens zwei Bibliotheken unterstützt, wobei die modifizierte Unternehmensanwendung durch Ändern einer Codebasis der Unternehmensanwendung erzeugt wird, und wobei die mindestens zwei Bibliotheken mindestens (i) eine oder mehrere bestehende Bibliotheken und (ii) eine oder mehrere eingehende Bibliotheken beinhalten, wobei die Codebasis der Unternehmensanwendung geändert wird durch:
(i) Annotieren einer Mehrzahl von Funktionen, die die Mehrzahl von Quellcodefragmenten aufrufen, die von dem Binär-zu-Quellcode-Abgleichmodul erhalten werden;
(ii) Erzeugen eines oder mehrerer neuer Pfade um jede der annotierten Mehrzahl von Funktionen in der Mehrzahl von Quellcode der Unternehmensanwendung, um die Ausführung der einen oder mehreren eingehenden Bibliotheken zu unterstützen; und
Injizieren einer Mehrzahl von neuen Quellcodefragmenten in den erzeugten einen oder die erzeugten mehreren neuen Pfade um jede der annotierten Mehrzahl von Funktionen in der Mehrzahl von Quellcode der Unternehmensanwendung;
Konfigurieren der mindestens zwei Bibliotheken in der modifizierten Unternehmensanwendung, so dass die Kompatibilität zwischen den mindestens zwei Bibliotheken aufrechterhalten wird, wobei die mindestens zwei Bibliotheken in der modifizierten Unternehmensanwendung konfiguriert werden, indem mindestens Folgendes durchgeführt wird:
(i) Detektieren eines oder mehrerer erster Typen von Programmvariablen und eines oder mehrerer zweiter Typen von Programmvariablen in der Mehrzahl von Quellcodefragmenten basierend auf einem Status, der eine Auswirkung auf die modifizierte Unternehmensanwendung aufgrund der einen oder mehreren eingehenden Bibliotheken aus den mindestens zwei verschiedenen Bibliotheken angibt, wobei der eine oder die mehreren zweiten Typen von Programmvariablen in der Mehrzahl von Quellcodefragmenten eine Auswirkung auf die modifizierte Unternehmensanwendung aufgrund der einen oder mehreren eingehenden Bibliotheken aus den mindestens zwei verschiedenen Bibliotheken aufweisen, und ferner Detektieren des einen oder der mehreren ersten Typen von Programmvariablen, die nicht von der einen oder den mehreren eingehenden Bibliotheken, die eingeführt werden, beeinflusst werden; und
(ii) Transformieren des einen oder der mehreren zweiten Typen von Programmvariablen in einen spezifischen Typ, um eine kompatible Konfiguration von sowohl (i) der einen oder den mehreren bestehenden Bibliotheken als auch (ii) der einen oder den mehreren eingehenden Bibliotheken zu unterstützen, wobei das Transformieren das Einfügen einer Programmanweisung und das Anwenden eines Typ-Cast-Operators umfasst, wobei eine Programmvariable transformiert wird, wenn eine Ausgabe, die von der einen oder den mehreren bestehenden Bibliotheken erzeugt wird, nicht mit einer Eingabeanforderung der einen oder der mehreren eingehenden Bibliotheken kompatibel ist, wobei die injizierte Mehrzahl von neuen Quellcodefragmenten eine Doppelverschlüsselung in dem erzeugten einen oder den erzeugten mehreren neuen Pfaden ermöglicht, wobei die Ausgabe der einen oder der mehreren bestehenden Bibliotheken durch eine Verschlüsselungsfunktion erzeugt wird und die Eingabe einer Verschlüsselungsfunktion der einen oder der mehreren eingehenden Bibliotheken bereitgestellt wird; und
(iii) Bestimmen eines oder mehrerer Parameter der einen oder der mehreren eingehenden Bibliotheken unter Verwendung einer Programm-Slicing-Technik basierend auf einem Kontext und einer Verwendung der einen oder der mehreren bestehenden Bibliotheken.

4. System nach Anspruch 3, wobei der eine oder die mehreren ersten Typen von Programmvariablen in der Mehrzahl von Quellcodefragmenten keine Beziehung auf die modifizierte Unternehmensanwendung aufgrund einer oder mehrerer eingehender Bibliotheken aus den mindestens zwei verschiedenen Bibliotheken aufweisen.

5. Ein oder mehrere nichtflüchtige computerlesbare Medien, die eine oder mehrere Anweisungen umfassen, die, wenn sie von einem oder mehreren Hardwareprozessoren ausgeführt werden, bewirken:
Empfangen einer Unternehmensanwendung und eines Satzes von Erkennungsregeln als Eingabe, wobei der Satz von Erkennungsregeln die Spezifikation einer oder mehrerer Verfahrenssignaturen einer bestehenden Bibliothek darstellt, die von der Unternehmensanwendung verwendet wird;
Durchführen einer Übereinstimmung zwischen dem Satz von Erkennungsregeln und einem Satz von binären Fragmenten, die in der Unternehmensanwendung identifiziert werden, um einen Satz von übereinstimmenden binären Fragmenten zu erhalten;
Erhalten einer Mehrzahl von Quellcodefragmenten durch Abbilden des Satzes von übereinstimmenden binären Fragmenten auf einen entsprechenden Anwendungsquellcode der Unternehmensanwendung;
Ermöglichen einer Hybridanwendungsarchitektur unter Verwendung der Mehrzahl von Quellcodefragmenten, um eine modifizierte Unternehmensanwendung zu erzeugen, die mindestens zwei Bibliotheken unterstützt, wobei die modifizierte Unternehmensanwendung durch Ändern einer Codebasis der Unternehmensanwendung erzeugt wird, und wobei die mindestens zwei Bibliotheken mindestens (i) eine oder mehrere bestehende Bibliotheken und (ii) eine oder mehrere eingehende Bibliotheken beinhalten, wobei die Codebasis der Unternehmensanwendung geändert wird durch:
(i) Annotieren einer Mehrzahl von Funktionen, die die Mehrzahl von Quellcodefragmenten aufrufen, die von dem Binär-zu-Quellcode-Abgleichmodul erhalten werden;
(ii) Erzeugen eines oder mehrerer neuer Pfade um jede der annotierten Mehrzahl von Funktionen in der Mehrzahl von Quellcode der Unternehmensanwendung, um die Ausführung der einen oder mehreren eingehenden Bibliotheken zu unterstützen; und
(iii) Injizieren einer Mehrzahl von neuen Quellcodefragmenten in den erzeugten einen oder die erzeugten mehreren neuen Pfade um jede der annotierten Mehrzahl von Funktionen in der Mehrzahl von Quellcode der Unternehmensanwendung;
Konfigurieren der mindestens zwei Bibliotheken in der modifizierten Unternehmensanwendung, so dass die Kompatibilität zwischen den mindestens zwei Bibliotheken aufrechterhalten wird, wobei die mindestens zwei Bibliotheken in der modifizierten Unternehmensanwendung konfiguriert werden, indem mindestens Folgendes durchgeführt wird:
(i) Detektieren eines oder mehrerer erster Typen von Programmvariablen und eines oder mehrerer zweiter Typen von Programmvariablen in der Mehrzahl von Quellcodefragmenten basierend auf einem Status, der eine Auswirkung auf die modifizierte Unternehmensanwendung aufgrund der einen oder mehreren eingehenden Bibliotheken aus den mindestens zwei verschiedenen Bibliotheken angibt, wobei der eine oder die mehreren zweiten Typen von Programmvariablen in der Mehrzahl von Quellcodefragmenten eine Auswirkung auf die modifizierte Unternehmensanwendung aufgrund der einen oder mehreren eingehenden Bibliotheken aus den mindestens zwei verschiedenen Bibliotheken aufweisen, und ferner Detektieren des einen oder der mehreren ersten Typen von Programmvariablen, die nicht von der einen oder den mehreren eingehenden Bibliotheken, die eingeführt werden, beeinflusst werden; und
(ii) Transformieren des einen oder der mehreren zweiten Typen von Programmvariablen in einen spezifischen Typ, um eine kompatible Konfiguration von sowohl (i) der einen oder den mehreren bestehenden Bibliotheken als auch (ii) der einen oder den mehreren eingehenden Bibliotheken zu unterstützen, wobei das Transformieren das Einfügen einer Programmanweisung und das Anwenden eines Typ-Cast-Operators umfasst, wobei eine Programmvariable transformiert wird, wenn eine Ausgabe, die von der einen oder den mehreren bestehenden Bibliotheken erzeugt wird, nicht mit einer Eingabeanforderung der einen oder der mehreren eingehenden Bibliotheken kompatibel ist, wobei die injizierte Mehrzahl von neuen Quellcodefragmenten eine Doppelverschlüsselung in dem erzeugten einen oder den erzeugten mehreren neuen Pfaden ermöglicht, wobei die Ausgabe der einen oder der mehreren bestehenden Bibliotheken durch eine Verschlüsselungsfunktion erzeugt wird und die Eingabe einer Verschlüsselungsfunktion der einen oder der mehreren eingehenden Bibliotheken bereitgestellt wird; und
(iii) Bestimmen eines oder mehrerer Parameter der einen oder der mehreren eingehenden Bibliotheken unter Verwendung einer Programm-Slicing-Technik basierend auf einem Kontext und einer Verwendung der einen oder der mehreren bestehenden Bibliotheken.

6. Nichtflüchtige computerlesbare Medien nach Anspruch 5, wobei der eine oder die mehreren ersten Typen von Programmvariablen in der Mehrzahl von Quellcodefragmenten keine Beziehung auf die modifizierte Unternehmensanwendung aufgrund einer oder mehrerer eingehender Bibliotheken aus den mindestens zwei verschiedenen Bibliotheken aufweisen.

## Revendications

1. Procédé mis en œuvre par processeur (200), comprenant :
la réception (202), via un premier module exécuté par un ou plusieurs processeurs matériels, d'une application d'entreprise et d'un ensemble de règles de détection en tant qu'entrée, dans lequel l'ensemble de règles de détection représente la spécification d'une ou plusieurs signatures de méthode d'une bibliothèque existante utilisée par l'application d'entreprise ;
l'exécution (204), via le premier module exécuté par un ou plusieurs processeurs matériels, d'une correspondance entre l'ensemble de règles de détection et un ensemble de fragments binaires identifiés dans l'application d'entreprise pour obtenir un ensemble de fragments binaires mis en correspondance ;
l'obtention (206), via un deuxième module exécuté par les un ou plusieurs processeurs matériels, d'une pluralité de fragments de code source en mettant en correspondance l'ensemble de fragments binaires mis en correspondance avec un code source d'application correspondant de l'application d'entreprise ;
l'activation (208), via un troisième module exécuté par les un ou plusieurs processeurs matériels, d'une architecture d'application hybride utilisant la pluralité de fragments de code source pour générer une application d'entreprise modifiée qui prend en charge au moins deux bibliothèques, dans lequel l'application d'entreprise modifiée est générée en changeant une base de code de l'application d'entreprise, et dans lequel les au moins deux bibliothèques incluent au moins (i) une ou plusieurs bibliothèques existantes, et (ii) une ou plusieurs bibliothèques entrantes, dans lequel la base de code de l'application d'entreprise est changée par :
(i) l'annotation d'une pluralité de fonctions invoquant la pluralité de fragments de code source obtenus par le module de mise en correspondance du code binaire avec le code source ;
(ii)la création d'un ou plusieurs nouveaux chemins autour de chacune de la pluralité annotée de fonctions dans la pluralité de code source de l'application d'entreprise pour prendre en charge l'exécution des une ou plusieurs bibliothèques entrantes ; et
(iii) l'injection d'une pluralité de nouveaux fragments de code source dans les un ou plusieurs nouveaux chemins créés autour de chacune de la pluralité annotée de fonctions dans la pluralité de code source de l'application d'entreprise ;
la configuration (210), via un quatrième module exécuté par les un ou plusieurs processeurs matériels, des au moins deux bibliothèques dans l'application d'entreprise modifiée de sorte que la compatibilité entre les au moins deux bibliothèques soit maintenue, dans lequel les au moins deux bibliothèques dans l'application d'entreprise modifiée sont configurées en effectuant au moins :
(i) la détection d'une ou plusieurs variables de programme d'un premier type et d'une ou plusieurs variables de programme d'un second type dans la pluralité de fragments de code source sur la base d'un état indicatif d'un impact sur l'application d'entreprise modifiée en raison des une ou plusieurs bibliothèques entrantes provenant des au moins deux bibliothèques différentes, dans lequel les une ou plusieurs variables de programme d'un second type dans la pluralité de fragments de code source présentent un impact sur l'application d'entreprise modifiée en raison d'une ou plusieurs bibliothèques entrantes provenant des au moins deux bibliothèques différentes et la détection en outre des une ou plusieurs variables de programme d'un premier type qui ne sont pas impactés par les une ou plusieurs bibliothèques entrantes étant introduites ; et
(ii) la transformation des une ou plusieurs variables de programme d'un second type en un type spécifique pour prendre en charge une configuration compatible à la fois (i) des une ou plusieurs bibliothèques existantes, et (ii) des une ou plusieurs bibliothèques entrantes, dans lequel la transformation comprend l'insertion d'une instruction de programme et l'application d'un opérateur de transtypage, dans lequel une variable de programme est transformée lorsqu'une sortie générée par les une ou plusieurs bibliothèques existantes n'est pas compatible avec une exigence d'entrée des une ou plusieurs bibliothèques entrantes, dans lequel la pluralité injectée de nouveaux fragments de code source active un double chiffrement dans les un ou plusieurs nouveaux chemins créés, où la sortie des une ou plusieurs bibliothèques est générée par une fonction de chiffrement et l'entrée est fournie à une fonction de chiffrement des une ou plusieurs bibliothèques entrantes ; et
(iii) la détermination d'un ou plusieurs paramètres des une ou plusieurs bibliothèques entrantes en utilisant une technique de découpage de programme sur la base d'un contexte et d'une utilisation des une ou plusieurs bibliothèques existantes.

2. Procédé mis en œuvre par processeur selon la revendication 1, dans lequel les une ou plusieurs variables de programme d'un premier type dans la pluralité de fragments de code source ne présentent aucune relation sur l'application d'entreprise modifiée en raison d'une ou plusieurs bibliothèques entrantes provenant des au moins deux bibliothèques différentes.

3. Système (100), comprenant :
une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou
plusieurs processeurs matériels (104) sont configurés par les instructions pour :
recevoir une application d'entreprise et un ensemble de règles de détection en tant qu'entrée, dans lequel l'ensemble de règles de détection représente la spécification d'une ou plusieurs signatures de méthode d'une bibliothèque existante utilisée par l'application d'entreprise ;
effectuer une correspondance entre l'ensemble de règles de détection et un ensemble de fragments binaires identifiés dans l'application d'entreprise pour obtenir un ensemble de fragments binaires mis en correspondance ;
obtenir une pluralité de fragments de code source en mettant en correspondance l'ensemble de fragments binaires mis en correspondance avec un code source d'application correspondant de l'application d'entreprise ;
activer une architecture d'application hybride utilisant la pluralité de fragments de code source pour générer une application d'entreprise modifiée qui prend en charge au moins deux bibliothèques, dans lequel l'application d'entreprise modifiée est générée en changeant une base de code de l'application d'entreprise, et dans lequel les au moins deux bibliothèques incluent au moins (i) une ou plusieurs bibliothèques existantes, et (ii) une ou plusieurs bibliothèques entrantes, dans lequel la base de code de l'application d'entreprise est changée par :
(i) l'annotation d'une pluralité de fonctions invoquant la pluralité de fragments de code source obtenus par le module de mise en correspondance du code binaire avec le code source ;
(ii) la création d'un ou plusieurs nouveaux chemins autour de chacune de la pluralité annotée de fonctions dans la pluralité de code source de l'application d'entreprise pour prendre en charge l'exécution des une ou plusieurs bibliothèques entrantes ; et
l'injection d'une pluralité de nouveaux fragments de code source dans les un ou plusieurs nouveaux chemins créés autour de chacune de la pluralité annotée de fonctions dans la pluralité de code source de l'application d'entreprise ;
configurer les au moins deux bibliothèques dans l'application d'entreprise modifiée de sorte que la compatibilité entre les au moins deux bibliothèques soit maintenue, dans lequel les au moins deux bibliothèques dans l'application d'entreprise modifiée sont configurées en effectuant au moins :
(i) la détection d'une ou plusieurs variables de programme d'un premier type et d'une ou plusieurs variables de programme d'un second type dans la pluralité de fragments de code source sur la base d'un état indicatif d'un impact sur l'application d'entreprise modifiée en raison des une ou plusieurs bibliothèques entrantes provenant des au moins deux bibliothèques différentes, dans lequel les une ou plusieurs variables de programme d'un second type dans la pluralité de fragments de code source présentent un impact sur l'application d'entreprise modifiée en raison d'une ou plusieurs bibliothèques entrantes provenant des au moins deux bibliothèques différentes et la détection en outre des une ou plusieurs variables de programme d'un premier type qui ne sont pas impactés par les une ou plusieurs bibliothèques entrantes étant introduites ; et
(ii) la transformation des une ou plusieurs variables de programme d'un second type en un type spécifique pour prendre en charge une configuration compatible à la fois (i) des une ou plusieurs bibliothèques existantes, et (ii) des une ou plusieurs bibliothèques entrantes, dans lequel la transformation comprend l'insertion d'une instruction de programme et l'application d'un opérateur de transtypage, dans lequel une variable de programme est transformée lorsqu'une sortie générée par les une ou plusieurs bibliothèques existantes n'est pas compatible avec une exigence d'entrée des une ou plusieurs bibliothèques entrantes, dans lequel la pluralité injectée de nouveaux fragments de code source active un double chiffrement dans les un ou plusieurs nouveaux chemins créés, où la sortie des une ou plusieurs bibliothèques existantes est générée par une fonction de chiffrement et l'entrée est fournie à une fonction de chiffrement des une ou plusieurs bibliothèques entrantes ; et
(iii) la détermination d'un ou plusieurs paramètres des une ou plusieurs bibliothèques entrantes en utilisant une technique de découpage de programme sur la base d'un contexte et d'une utilisation des une ou plusieurs bibliothèques existantes.

4. Système selon la revendication 3, dans lequel les une ou plusieurs variables de programme d'un premier type dans la pluralité de fragments de code source ne présentent aucune relation sur l'application d'entreprise modifiée en raison d'une ou plusieurs bibliothèques entrantes provenant des au moins deux bibliothèques différentes.

5. Un ou plusieurs supports lisibles par ordinateur non transitoires comprenant une ou plusieurs instructions qui, lorsqu'elles sont exécutées par un ou plusieurs processeurs matériels, amènent :
la réception d'une application d'entreprise et d'un ensemble de règles de détection en tant qu'entrée, dans lequel l'ensemble de règles de détection représente la spécification d'une ou plusieurs signatures de méthode d'une bibliothèque existante utilisée par l'application d'entreprise ;
l'exécution d'une correspondance entre l'ensemble de règles de détection et un ensemble de fragments binaires identifiés dans l'application d'entreprise pour obtenir un ensemble de fragments binaires mis en correspondance ;
l'obtention d'une pluralité de fragments de code source en mettant en correspondance l'ensemble de fragments binaires mis en correspondance avec un code source d'application correspondant de l'application d'entreprise ; l'activation d'une architecture d'application hybride utilisant la pluralité de fragments de code source pour générer une application d'entreprise modifiée qui prend en charge au moins deux bibliothèques, dans lequel l'application d'entreprise modifiée est générée en changeant une base de code de l'application d'entreprise, et dans lequel les au moins deux bibliothèques incluent au moins
(i) une ou plusieurs bibliothèques existantes, et (ii) une ou plusieurs bibliothèques entrantes, dans lequel la base de code de l'application d'entreprise est changée par :
(i) l'annotation d'une pluralité de fonctions invoquant la pluralité de fragments de code source obtenus par le module de mise en correspondance du code binaire avec le code source ;
(ii) la création d'un ou plusieurs nouveaux chemins autour de chacune de la pluralité annotée de fonctions dans la pluralité de code source de l'application d'entreprise pour prendre en charge l'exécution des une ou plusieurs bibliothèques entrantes ; et
(iii) l'injection d'une pluralité de nouveaux fragments de code source dans les un ou plusieurs nouveaux chemins créés autour de chacune de la pluralité annotée de fonctions dans la pluralité de code source de l'application d'entreprise ;
la configuration des au moins deux bibliothèques dans l'application d'entreprise modifiée de sorte que la compatibilité entre les au moins deux bibliothèques soit maintenue, dans lequel les au moins deux bibliothèques dans l'application d'entreprise modifiée sont configurées en effectuant au moins :
(i) la détection d'une ou plusieurs variables de programme d'un premier type et d'une ou plusieurs variables de programme d'un second type dans la pluralité de fragments de code source sur la base d'un état indicatif d'un impact sur l'application d'entreprise modifiée en raison des une ou plusieurs bibliothèques entrantes provenant des au moins deux bibliothèques différentes, dans lequel les une ou plusieurs variables de programme d'un second type dans la pluralité de fragments de code source présentent un impact sur l'application d'entreprise modifiée en raison d'une ou plusieurs bibliothèques entrantes provenant des au moins deux bibliothèques différentes et la détection en outre des une ou plusieurs variables de programme d'un premier type qui ne sont pas impactés par les une ou plusieurs bibliothèques entrantes étant introduites ; et
(ii) la transformation des une ou plusieurs variables de programme d'un second type en un type spécifique pour prendre en charge une configuration compatible à la fois (i) des une ou plusieurs bibliothèques existantes, et (ii) des une ou plusieurs bibliothèques entrantes, dans lequel la transformation comprend l'insertion d'une instruction de programme et l'application d'un opérateur de transtypage, dans lequel une variable de programme est transformée lorsqu'une sortie générée par les une ou plusieurs bibliothèques existantes n'est pas compatible avec une exigence d'entrée des une ou plusieurs bibliothèques entrantes, dans lequel la pluralité injectée de nouveaux fragments de code source active un double chiffrement dans les un ou plusieurs nouveaux chemins créés, où la sortie des une ou plusieurs bibliothèques existantes est générée par une fonction de chiffrement et l'entrée est fournie à une fonction de chiffrement des une ou plusieurs bibliothèques entrantes ; et
(iii) la détermination d'un ou plusieurs paramètres des une ou plusieurs bibliothèques entrantes en utilisant une technique de découpage de programme sur la base d'un contexte et d'une utilisation des une ou plusieurs bibliothèques existantes.

6. Supports lisibles par ordinateur non transitoires selon la revendication 5, dans lequel les une ou plusieurs variables de programme d'un premier type dans la pluralité de fragments de code source ne présentent aucune relation sur l'application d'entreprise modifiée en raison d'une ou plusieurs bibliothèques entrantes provenant des au moins deux bibliothèques différentes.
